# EUROPÄISCHE PATENTSCHRIFT

(11) **EP 2 567 224 B1**
(45) Veröffentlichungstag und Bekanntmachung des Hinweises auf die Patenterteilung: **04.03.2015**
(21) Anmeldenummer: 11719194.0
(22) Anmeldetag: 04.05.2011
(51) Int. Cl.: G01N 29/24, G01N 27/90

(54) **VERFAHREN UND VORRICHTUNG ZUR ZERSTÖRUNGSFREIEN MATERIALUNTERSUCHUNG MITTELS ULTRASCHALL**
METHOD AND DEVICE FOR NON-DESTRUCTIVE MATERIAL TESTING BY MEANS OF ULTRASOUND
PROCÉDÉ ET DISPOSITIF POUR UNE ANALYSE NON DESTRUCTIVE DE MATÉRIAUX PAR ULTRASONS

(30) Priorität: 05.05.2010 DE 102010019477
(43) Veröffentlichungstag der Anmeldung: 13.03.2013
(73) Patentinhaber: Fraunhofer-Gesellschaft zur Förderung der angewandten Forschung e.V., 80686 München (DE)
(72) Erfinder: DOBMANN, Gerd, 66125 Saarbrücken (DE); HÜBSCHEN, Gerhard, 66740 Saarlouis (DE); KURZ, Jochen, 66121 Saarbrücken (DE)
(74) Vertreter: Rösler, Uwe
(86) Internationale Anmeldenummer: PCT/EP2011/002227
(87) Internationale Veröffentlichungsnummer: WO 2011/138027

(56) Entgegenhaltungen:
- WO-A1-2009/087342
- DE-A1- 3 530 525
- DE-A1- 10 304 270
- US-A1- 2007 074 572

## Beschreibung

### Technisches Gebiet

Die Erfindung bezieht sich auf ein Verfahren sowie eine Vorrichtung zur zerstörungsfreien Materialuntersuchung an einem aus elektrisch leitendem Material bestehenden Werkstück mittels EMUS-Prüftechnik, die den Einsatz von EMUS-Wandlern vorsieht, die jeweils über eine Magneteinheit zur lokalen Einleitung eines Magnetfeldes in das Werkstück sowie über eine mit dem Magnetfeld in Wechselwirkung tretende Hochfrequenzspulenanordnung, kurz HF-Spule, verfügen.

### Stand der Technik

Der Einsatz von elektromagnetischen Ultraschallwandlern, kurz EMUS-Wandler, zum Zwecke der zerstörungsfreien Materialuntersuchung (ZMU)an einem aus elektrisch leitfähigem Material bestehenden Werkstück ist hinlänglich bekannt und die Grundprinzipien zur elektrodynamischen Erzeugbarkeit von Ultraschallwellen durch gezielte Ausnutzung von Lorenzkräften sowie der Magnetostriktion, wenn das Material ferromagnetisch ist, sind dem Fachmann vertraut. Nur kursorisch sei in diesem Zusammenhang auf die EP 0 440 317 B1 verwiesen, in der ein Verfahren sowie eine Prüfvorrichtung zum Prüfen ferromagnetischer Werkstücke mittels Ultraschall beschrieben sind.

Aus DE 35 30 525 A1 ist eine Vorrichtung zur zerstörungsfreien Werkstoffprüfung zu entnehmen, mit der neben der Ultraschallprüfung zusätzlich noch eine Wirbelstromprüfung auf oberflächennahe Inhomogenitäten durchgeführt werden kann. Hierzu weist ein EMUS-Prüfkopf noch zusätzlich ein in Differenzschaltung angeordnetes Empfangsspulenpaar auf.

Aus US 2007/0074572 A1 ist ein EMUS-Prüfkopf bekannt, der an seinem werkstückseitigen Ende ein den magnetischen Fluss konzentrierendes Element aufweist.

Die WO 2009/087342 A1 zeigt ein Verfahren und eine Vorrichtung zur Inspektion von Pipelines mittels Ultraschall, bei dem zwei unterschiedliche Wellenmoden (horizontal polarisierte Scherwellen bzw. symmetrische Lamb-Wellen) in eine Prüfkörper eingekoppelt werden. Aus dem Verhältnis der detektierten Amplituden der verschiedenen Wellentypen kann auf die Art des Defekts in der Pipeline zurückgeschlossen werden.

Die DE 103 04 270 A1 offenbart ein Verfahren und eine Vorrichtung zum Auffinden von Fehlstellen in einem rotationssymmetrischen Prüfkörper, bei dem mit einem ersten EMUS-Wandler Ultraschallwellen in zwei entgegengesetzt gerichteten Ausbreitungsrichtungen in den Prüfling eingekoppelt werden, so dass sich die Wellen gegenläufig in Umfangsrichtung ausbreiten. Mit einem zweiten, beabstandet angeordneten EMUS-Wandler werden die Ultraschallwellen aus den zwei Richtungen detektiert.

Aus US 6,161,434 ist ein Verfahren und eine Vorrichtung zur Detektion und Lokalisation einer schwachen Schallquelle. Zunächst werden mit einem Array von Empfängern Signale aufgenommen und abgespeichert, zu denen möglicherweise eine schwache Schallquelle beiträgt. Für jedes Signal wird der in einem bestimmten Zeitfenster abgespeicherte Teil zeitlich umgedreht und verstärkt, um ein Anregungssignal für die Sender zu erzeugen. Aus den akustischen Signalen, die dann empfangen und in elektrische Signale gewandelt werden, kann eine mögliche, reflektierende Schallquelle detektiert werden.

Die US 5,456,113 offenbart eine zerstörungsfreie Untersuchung von ferromagnetischen Kabeln und Seilen hinsichtlich Brüchen, Rissen und anderer Anomalien mittels magnetostriktiv induzierten Schall- bzw. Ultraschallwellen und magnetostriktiv detektierten akustischen Emissionen. Mit einem Sender werden Schall-/Ultraschallpulse im Material erzeugt und mit einem zum Sender beabstandeten Empfänger werden reflektierte Schall-/Ultraschallwellen detektiert.

Neben typischen Untersuchungszielen mittels ZMU, wie bspw. die Vermessung von Werkstücksdicken, das Untersuchen von Werkstücken auf vorhandene Materialungänzen, wie bspw. Lunker oder Risse, sind vielfältige Ansätze bekannt, Werkstücke, die insbesondere hohen mechanischen und thermischen Belastungen ausgesetzt werden, hinsichtlich auftretender belastungsbedingter Ermüdungsschädigungen zu untersuchen. Bspw. sind austenitische Rohrleitungen in Kraftwerken, Chemieanlagen und Raffinerien, oder den Heißgasen in Gasturbinenkraftwerken unmittelbar ausgesetzte Anlagenkomponenten, wie bspw. die Turbinenbeschaufelung, hohen mechanischen und/oder thermomechanischen Beanspruchen unterworfen, die es aus sicherheitstechnischen Gründen hinsichtlich möglicher belastungsbedingter Mikrostrukturschädigungen bzw. -veränderungen zu überprüfen gilt.

Neben bekannten Verfahren zur Mikrostrukturuntersuchung an Werkstücken bzw. Werkstückproben bedingt durch Ermüdungsschädigungen, wie bspw. die Nutzung des magnetischen Barkhausen-Rauscheffektes, siehe DE 42 35 387 C1, der Einsatz des seit Jahrzehnten bekannten Potential-Sonden-Verfahrens, siehe hierzu DE 38 28 552 C2, oder der Einsatz von Röntgenspannungsanalysen, konnten insbesondere im Rahmen von Ultraschalluntersuchungen messtechnisch erfassbare Abhängigkeiten zwischen dem Ultraschallwellenausbreitungsverhalten und alterungsbedingten bzw. belastungsbedingten Mikrostrukturänderungen innerhalb eines Werkstückes festgestellt werden.

Beispielsweise konnte an einer aus einer hochwarmfesten Stahllegierung (P92) ein linearer Zusammenhang zwischen dem Rückstreuverhalten von in die Werkstückprobe eingekoppelten Ultraschalloberflächenwellen, sog. Rayleigh-Wellen und einem Schädigungsgrad messtechnisch nachgewiesen werden, der von alterungsbedingten Kriechermüdungsschädigungen herrührt (siehe Yokono, Y. et al, "Nondestructive Evaluation of Creep Damage using Leaky Surface Acoustic Wave Technique", JMSE International Journal, Series A, Volume 45, No. 1 (2002), Seite 39 bis 45.

Obwohl es sich bei der Ausbildung von Kriechschäden innerhalb eines Werkstückes um andere Mechanismen handelt als bei der thermisch-mechanischen Werkstoffermüdung, ist das erste Stadium der Kriechschädigung ebenfalls durch die Formation definierter Versetzungsanordnungen geprägt. Insofern kann davon ausgegangen werden, dass zerstörungsfreie Prüfmethoden, die das frühe Stadium der Kriechschädigung zu detektieren vermögen, auch Potenzial für die Früherkennung der durch Ermüdungsbeanspruchung beeinflussten Mikrostrukturänderungen aufweisen. Für die einzelnen Phasen der Schädigung, nämlich a) der Formation von Versetzungen in der Mikrostruktur des Werkstückes, b) der Entstehung von Poren, c) die Entstehung von orientierten Poren, die sich zu Mikrorissen verbinden, d) das Anwachsen zu Mikrorissen und Makrorissen bis kurz vor dem Bruch des jeweiligen Werkstückes, können auf der Grundlage der bisher gewonnenen Kenntnisse folgende messtechnisch erfassbare Abhängigkeiten in Verbindung mit dem Auftreten früher Kriechschädigungen wie folgt festgehalten werden:
Bereits bei Auftreten von formierten Versetzungen in der Mikrostruktur des Werkstückes, also der Frühphase einer Kriechschädigung, nimmt die Amplitude von sich oberflächlich zur Werkstückoberfläche ausbreitenden Rayleigh-Wellen ab, zumal zunehmend Energie durch Streuung und Mehrfachstreuung innerhalb des Werkstückvolumens verbraucht wird.

Zudem nimmt die Ausbreitungsgeschwindigkeit der Ultraschallimpulse aufgrund von Dissipation ab, wodurch es zu einer Entmischung der höheren Frequenzanteile im Spektrum des Ultraschallwellenimpulses kommt. Aus dem gleichen Grund, nämlich dissipativer Effekte, nimmt die Mittenfrequenz des Frequenzspektrums des Ultraschallimpulses gleichfalls ab.

### Darstellung der Erfindung

Der Erfindung liegt die Aufgabe zugrunde, ein Verfahren sowie eine Vorrichtung zur zerstörungsfreien Materialuntersuchung und einem aus elektrisch leitendem Material bestehenden Werkstück mittels EMUS-Prüftechnik zu beschreiben, die den Einsatz von EMUS-Wandlern vorsieht, die jeweils über eine Magneteinheit zur lokalen Einleitung eines Magnetfeldes in das Werkstück sowie über eine mit dem Magnetfeld in Wechselwirkung tretende Hochfrequenzspulenanordnung kurz HF-Spule, verfügen. Bei dem Verfahren werden relativ zu einer Oberfläche des Werkstückes wenigstens zwei EMUS-Wandler mit einem gegenseitigen Abstand längs zur Oberfläche angeordnet, von denen wenigstens ein erster EMUS-Wandler Ultraschallwellen innerhalb des Werkstücks erzeugt sowie auch detektiert und der zweite EMUS-Wandler als Empfangswandler zumindest Ultraschallwellen detektiert, und es werden folgende Messsignale ermittelt:
a) mittels des ersten EMUS-Wandlers werden Ultraschallwellen-Echosignale, die vom ersten EMUS-Wandler ausgehen, erfasst,
b) mittels des zweiten EMUS-Wandlers werden Ultraschallwellensignale, so genannte Durchschallungssignale, die vom ersten EMUS-Wandler erzeugt werden, zeitaufgelöst erfasst.

Die Vorrichtung weist eine Steuer- und Auswerteeinheit auf, die die HF-Spule des einen EMUS-Wandlers mit einem Sendestrom beaufschlagt, die von dem einen EMUS-Wandler empfangene Ultraschallechosignale nach Empfangsamplituden auswertet, und die die Amplituden der am anderen EMUS-Wandler empfangenen Ultraschallsignale integriert und eine Laufzeitmessung durchführt.

Verfahren und Vorrichtung sind derart weiterzubilden, dass die Zuverlässigkeit sowie auch die Sensitivität, mit der Mikrostrukturveränderungen, insbesondere Ermüdungs- und Kriechschädigungen in einem frühen Stadium detektiert werden, verbessert werden sollen. Der hierzu erforderliche verfahrenstechnische sowie auch vorrichtungstechnische Aufwand sollte möglichst gering und kostengünstig sein.

Die Lösung der der Erfindung zugrunde liegenden Aufgabe ist im Anspruch 1 angegeben. Gegenstand des Anspruches 14 ist eine lösungsgemäße Vorrichtung.

Ein Verfahren zur zerstörungsfreien Materialuntersuchung an einem aus elektrisch leitendem Material bestehenden Werkstück mittels EMUS-Prüfungstechnik gemäß den Merkmalen des Oberbegriffes des Anspruches 1 zeichnet sich dadurch aus, dass mit Hilfe der beiden EMUS-Wandler folgende Messsignale ermittelt werden:
c) Erfassen einer Amplitude des Sendestromes, mit dem die HF-Spule des ersten EMUS-Wandlers betrieben wird,
d) Erfassen von einem Schallemissionssignal, das an einer sich innerhalb des Werkstückes ausbildenden Ungänze entsteht, durch den Empfangswandler, und dass auf der Grundlage sämtlicher Messsignale a) bis d) die zerstörungsfreie Materialuntersuchung zu Zwecken einer Früherkennung von Mikrostrukturveränderungen durchgeführt wird.

Mit Hilfe des ersten EMUS-Wandlers werden Ultraschallwellen-Echosignale, die von dem ersten EMUS-Wandlers ausgehend, erfasst. Hierzu bedient man sich der Impuls-Echo-Technik, mit der die Laufzeiten sowie auch die Amplituden von an innerhalb des Werkstückes reflektierten Ultraschallwellenanteilen mit dem ersten EMUS-Wandlers erfasst werden. Desweiteren werden mittels des zweiten EMUS-Wandlers, Ultraschallwellenanteile erfasst, die vom ersten EMUS-Wandler innerhalb des Werkstückes hervorgerufen werden und sich in Form oberflächennaher Rayleigh-Wellen ausbreiten. Auch in diesem Fall werden Amplituden und Laufzeit der am zweiten EMUS-Wandler eintreffenden Rayleigh-Wellen in Durchschallungstechnik erfasst bzw. ausgewertet. Zudem wird ferner der die Amplitude des Sendestroms erfasst, mit dem die HF-Spule des ersten EMUS-Wandlers betrieben bzw. aktiviert wird. In einem speziellen Prüftakt werden schließlich vom zweiten EMUS-Wandler Schallemissionssignale erfasst, die sich an einer innerhalb des Werkstückes ausbildenden Ungänze, bspw. in Form sich ausbildender Mikrorisse entstehen.

Bei diesem Prüftakt werden im passiven Betrieb mittels des EMUS-Empfangswandlers Schallsignale empfangen, die von elastischen Wellen herrühren, die während der Rissentstehung und des Risswachtums freigesetzt werden. Hierbei werden transiente Signale vom zweiten EMUS-Wandler empfangen und entsprechend aufgezeichnet.

Sämtliche vorstehenden Messsignale, d. h. die vom ersten EMUS-Wandler erfassten Ultraschallwellenechosignale, die vom zweiten EMUS-Wandler zeitaufgelöst erfassten Durchschallungssignale, jeweils in Form von Empfangsspannungen, der Sendestrom der HF-Spule des ersten EMUS-Wandlers sowie auch die Schallemissionssignale werden schließlich zur zerstörungsfreien Materialuntersuchung zu Zwecken der Früherkennung von Mikrostrukturveränderungen zugrunde gelegt.

In besonders vorteilhafter Weise eignet sich als weiterer Messparameter die Erfassung des Stromes und der Spannung der HF-Spule des ersten EMUS-Wandlers.

Durch die lösungsgemäße Nutzung der Ultraschall- und Wirbelstrommessgrößen, gelingt es sensitive Veränderungen innerhalb der Mikrostruktur von Werkstückoberflächen sowie auch in oberflächennahen Bereichen des Werkstückes zuverlässig zu erfassen. Die mit den lösungsgemäßen Verfahren gewonnenen Messsignale werden mit Referenzdaten verglichen, die im Rahmen von z. B. thermomechanischen Ermüdungsversuchen an entsprechenden Referenzwerkstücken aufgenommen worden sind, deren Mikrostrukturbeschaffenheit mittels konventionellen Untersuchungsmethoden, bspw. Dehnungsmessstreifen, Röntgenspannungsanalyse, magnetische Verfahren unter Nutzung des Barkhausen-Rauschens, um nur einige zu nennen, ermittelt worden ist. Auf diese Weise erhält man einen Referenzdatensatz, bei dem Ultraschall- und Wirbelstrommessgrößen konkreten Mikrostrukturzuständen zugeordnet sind, und der zumindest eine qualitative Bewertung von an einem zu untersuchenden Werkstück erfassten Messsignalen ermöglicht.

Eine weitere, besonders bevorzugte Ausführungsvariante des lösungsgemäßen Verfahrens sieht den Einsatz mehrerer zweiter EMUS-Wandler in Form von Empfangswandlern vor, die flächig verteilt auf der Werkstückoberfläche angebracht werden und mit denen es möglich ist, eine Ortsbestimmung von Materialungänzen, bspw. eine Ortung eines sich ausbildenden Mikrorisses, vorzunehmen.

Zur Durchführung des lösungsgemäßen Verfahrens zur zerstörungsfreien Materialuntersuchung bedarf es wenigstens zweier EMUS-Wandler, die mit einem gegenseitigen Abstand an die Oberfläche eines zu untersuchenden Werkstückes anzuordnen sind. Von den wenigstens zwei EMUS-Wandlern ist ein erster EMUS-Wandler zur Erzeugung und Detektion von Ultraschallwellen ausgebildet. Der wenigstens zweite EMUS-Wandler dient in erster Linie als Empfangswandler zur Detektion von Ultraschallwellen. Beide EMUS-Wandler sind mit einer Steuer- und Auswerteeinheit verbunden, die die HF-Spule des zumindest ersten EMUS-Wandler mit einem Sendestrom beaufschlagt. Lösungsgemäß erfasst die Steuer- und Auswerteeinheit die Amplitude des Sendestromes sowie die Wirbelstromimpedanz der HF-Spule des einen EMUS-Wandlers, und die Steuer- und Auswerteeinheit ist in einem Messmodus betreibbar, bei dem mittels des Empfangswandlers ein Schallemissionssignal erfasst wird, das an einer sich innerhalb des Werkstückes ausbildenden Ungänze entsteht. Die Steuer- und Auswerteeinheit führt die zerstörungsfreie Materialuntersuchung auf der Grundlage sämtlicher erfasster Messsignale zu Zwecken einer Früherkennung von Mikrostrukturveränderungen durch.

Die Steuer- und Auswerteeinheit erfasst die Amplitude des Sendestroms sowie die Spannung der HF-Spule des ersten EMUS-Wandlers. Im Rahmen der Steuer- und Auswerteeinheit werden die Ultraschallechosignale des ersten EMUS-Wandlers unter Berücksichtigung von Laufzeit und Empfangsamplituden ausgewertet. Die seitens des zweiten EMUS-Wandlers empfangenen Durchschallungsultraschallsignale werden im Rahmen der Steuer- und Auswerteeinheit hinsichtlich ihrer Amplituden integriert und eine Laufzeitmessung durchgeführt.

Die Laufzeitmessung kann nach folgenden Verfahren erfolgen: Impuls-Echo-Überlagerung, Verfolgung einer Amplitudennullstelle oder Kreuzkorrellationsverfahren. Die Genauigkeit ist jeweils abhängig von der Anzahl der gemittelten Einzelmessungen.

Die lösungsgemäß wenigstens zwei EMUS-Wandler umfassende Vorrichtung zur zerstörungsfreien Materialuntersuchung ist vorzugsweise als portable, manuell bedienbare Einheit ausgebildet, mit der Werkstücke beliebiger Form und Größe untersucht werden können.

Ein typisches Anwendungsgebiet ist die zerstörungsfreie Werkstoffcharakterisierung von austenitischen Rohrleitungen in Kraftwerken, Chemieanlagen und Raffinerien, die einer mechanischen und/oder thermomechanischen Beanspruchung unterworfen sind. In besonders vorteilhafter Weise eignen sich die lösungsgemäße Vorrichtung sowie aber auch das vorstehend beschriebene Verfahren zur Bauteilüberwachung in Echtzeit. Selbstverständlich kann das Verfahren in periodischer Wiederkehr an entsprechenden Prüfstücken, bspw. an den Laufrädern von Eisenbahnwägen durchgeführt werden. Das lösungsgemäße Verfahren lässt sich grundsätzlich an allen elektrisch leitenden Werkstoffen durchführen, nicht notwendigerweise ist das Verfahren auf Stähle, insbesondere austenitische Stähle beschränkt.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1a, b, c: schematische Darstellung einer lösungsgemäß ausgebildeten Vorrichtung in drei alternativen Anordnungen an einer Ermüdungsprobe sowie
- Fig. 2: lösungsgemäße Vorrichtung an einer zu untersuchenden Rohrleitung.

### Wege zur Ausführung der Erfindung, gewerbliche Verwendbarkeit

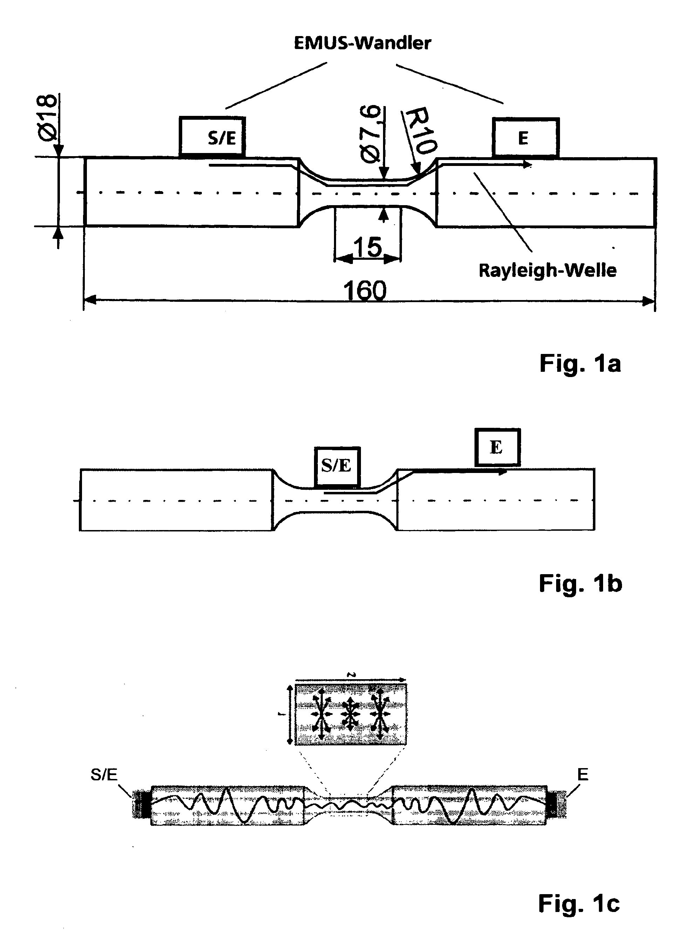

In Figur 1a, b ist der Längsschnitt durch eine im wesentlichen zylinderförmig ausgebildete Ermüdungsprobe dargestellt, die eine Länge von 160 mm aufweist und einen taillierten Mittenbereich vorsieht, mit einer Länge von 15 mm und einem gedünnten Durchmesser von 7,6 mm. Der taillierte Mittenbereich weitet sich beidseitig längs seiner Längserstreckung über einen Krümmungsradius R10 auf und schließt beidseitig jeweils an die die Ermüdungsprobe begrenzenden Endabschnitten, jeweils mit einem Durchmesser von 18 mm an.

Im dargestellten Beispiel gemäß Figur 1a ist auf dem linken Ermüdungsprobenendabschnitt der erste EMUS-Wandler E/S angebracht, der sowohl Ultraschallwellen in die Ermüdungsprobe einschallt als auch innerhalb der Ermüdungsprobe reflektierte Ultraschallwellenanteile zu detektieren vermag. Auf dem rechten Ermüdungsprobenbereich ist der zweite EMUS-Wandler E angeordnet, der lediglich als Empfangswandler dient und die vom ersten EMUS-Wandler S/E in die Ermüdungsprobe eingeschallten Rayleigh-Wellen, die sich oberflächennah längs zur Ermüdungsprobe auszubreiten vermögen und den taillierten Mittenbereich durchwandern (siehe Pfeildarstellung), zu detektieren vermag. Alternativ zur Platzierung des ersten EMUS-Wandlers S/E auf dem linken Ermüdungsprobenendabschnitt ist es ebenso möglich den ersten EMUS-Wandler S/E im taillierten Mittenbereich der Ermüdungsprobe selbst anzuordnen, wie dies aus der Anordnung gemäß Figur 1b zu entnehmen ist. In beiden beschriebenen Fällen kann der Empfangswandler E auch zur Detektion von Schallemissionssignalen genutzt werden, die die von elastischen Wellen herrühren, die während der Rissentstehung und des Risswachtums freigesetzt werden.

Eine dritte Anordnungsweise der EMUS-Wanlder ist in der Figur 1c gezeigt. Hier sind der erste EMUS-Wandler S/E sowie der zweite EMUS-Wandler E jeweils stirnseitig an den sich gegenüberliegenden Stirnseiten der Ermüdungsprobe angebracht. Der erste EMUS-Wandler S/E vermag in dieser Anordnung radial polarisierte Ultraschallwellen in die Ermüdungsprobe einzuschallen, die sich längs der länglichen Ermüdungsprobe, d.h. in z-Richtung, auszubreiten und in radialer Richtung r orientierte Partikelauslenkungen bzw. Druckwellen zu generieren vermögen (siehe Detaildarstellung in Fig. 1c).

Mit Hilfe der in den Figuren 1a, b, c illustrierten Ultraschallwandler-Anordnung können sowohl Ultraschallwellen im Rahmen der Impulsechotechnik als auch der Durchschallungstechnik empfangen und ausgewertet werden. Zusätzlich (nicht dargestellt) gilt es den Spulenstrom der HF-Spule zum Betrieb des ersten EMUS-Wandlers S/E sowie dessen Wirbelstromimpedanz zu erfassen und bei der Auswertung der Messsignale entsprechend zu berücksichtigen.

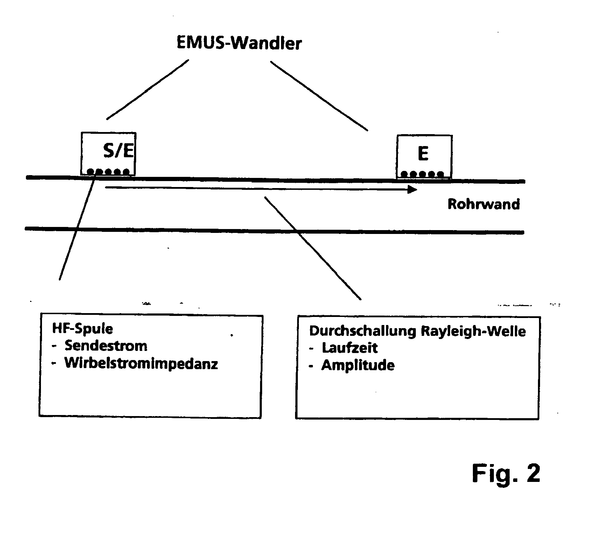

In gleicher Weise ist es möglich, eine derartige Sensoranordnung an der Außenwand eines Rohres zur Untersuchung einer Rohrwand vorzusehen. Eine derartige Anordnung ist in Figur 2 dargestellt, die einen Teillängsschnitt einer Rohrwand darstellt, an deren Außenwand der erste EMUS-Wandler S/E sowie in axialem Abstand zum Rohrverlauf der zweite EMUS-Wandler E angeordnet sind. Wieder gilt es neben den Ultraschallmessgrößen, d. h. Echoamplitude sowie Laufzeit am Ort des ersten EMUS-Wandlers und die integrale Ultraschallamplitude sowie Laufzeit der sich oberflächennah ausbreitenden Rayleigh-Welle vom ersten zum zweiten EMUS-Wandler, die Wirbelstrommessgrößen zu erfassen, d. h. den Sendestrom der HF-Spule des ersten EMUS-Wandlers sowie dessen Wirbelstromimpedanz. Mittels des EMUS-Wandlers E können, wie im vorstehenden Fall auch Schallemissionssignale empfangen und anschließend ausgewertet werden. Alle vorstehenden Messgrößen werden mit entsprechenden Referenzdaten verglichen, um mögliche Veränderungen in der Mikrostruktur in der Rohrwand zu erfassen.

Insbesondere durch die zusätzliche Messung und Berücksichtigung des Sendestroms sowie der Wirbelstromimpedanz der HF-Spule des ersten EMUS-Wandlers lassen sich bereits Mikrogefügeveränderungen in ihrer Entstehungs- bzw. Anfangsphase sensitiv erfassen.

## Patentansprüche

1. Verfahren zur zerstörungsfreien Materialuntersuchung an einem aus elektrisch leitendem Material bestehenden Werkstück mittels EMUS-Prüftechnik, die den Einsatz von EMUS-Wandlern vorsieht, die jeweils über eine Magneteinheit zur lokalen Einleitung eines Magnetfeldes in das Werkstück sowie über eine mit dem Magnetfeld in Wechselwirkung tretende Hochfrequenzspulenanordnung, kurz HF-Spule, verfügen, bei dem relativ zu einer Oberfläche des Werkstückes wenigstens zwei EMUS-Wandler mit einem gegenseitigen Abstand längs zur Oberfläche angeordnet werden, von denen wenigstens ein erster EMUS-Wandler Ultraschallwellen innerhalb des Werkstücks erzeugt sowie auch detektiert und der zweite EMUS-Wandler als Empfangswandler zumindest Ultraschallwellen detektiert, und bei dem folgende Messsignale ermittelt werden:
a) mittels des ersten EMUS-Wandlers werden Ultraschallwellen-Echosignale, die vom ersten EMUS-Wandler ausgehen, erfasst,
b) mittels des zweiten EMUS-Wandlers werden Ultraschallwellensignale, so genannte Durchschallungssignale, die vom ersten EMUS-Wandler erzeugt werden, zeitaufgelöst erfasst,
**dadurch gekennzeichnet, dass** folgende Messsignale ermittelt werden:
c) Erfassen einer Amplitude des Sendestromes, mit dem die HF-Spule des ersten EMUS-Wandlers betrieben wird,
d) Erfassen von einem Schallemissionssignal, das an einer sich innerhalb des Werkstückes ausbildenden Ungänze entsteht, durch den Empfangswandler, und
dass auf der Grundlage sämtlicher Messsignale a) bis d) die zerstörungsfreie Materialuntersuchung zu Zwecken einer Früherkennung von Mikrostrukturveränderungen durchgeführt wird.

2. Verfahren nach Anspruch 1,
**dadurch gekennzeichnet, dass** zusätzlich die Spannung der HF-Spule des ersten EMUS-Wandlers erfasst wird, die als weiteres Messsignal e) der Früherkennung von Mikrostrukturveränderungen zugrunde gelegt wird.

3. Verfahren nach Anspruch 2,
**dadurch gekennzeichnet, dass** die Wirbelstromimpedanz der HF-Spule gemessen wird, während der Sendestrom der HF-Spule geregelt wird.

4. Verfahren nach einem der Ansprüche 1 bis 3,
**dadurch gekennzeichnet, dass** der erste EMUS-Wandler sich räumlich frei zur Werkstückoberfläche in das Werkstück ausbreitende Ultraschallwellen, als auch sich längs zur Werkstückoberfläche ausbreitende Ultraschallwellen erzeugt,
dass Anteile von innerhalb des Werkstückes reflektierten, in Form zeitabhängiger Ultraschallwellen-Echoamplituden vom ersten EMUS-Wandler detektiert werden und dass Anteile der sich längs zur Werkstückoberfläche ausbreitenden Ultraschallwellen von dem zweiten EMUS-Wandler erfasst werden.

5. Verfahren nach einem der Ansprüche 1 bis 4,
**dadurch gekennzeichnet, dass** Amplituden der Ultraschallwellen-Echosignale sowie integrale Amplituden und Laufzeiten der Durchschallungssignale bestimmt und der Auswertung zugrunde gelegt werden.

6. Verfahren nach einem der Ansprüche 1 bis 5,
**dadurch gekennzeichnet, dass** im Rahmen von thermischen Ermüdungsversuchen Referenzdaten zu den Messsignalen a) bis d) an einem Werkstück aufgenommen werden, und
dass auf der Grundlage der Referenzdaten Kalibrierkurven für das Werkstück erstellt werden, die für die Beurteilung der Messsignale a) bis d) zu Zwecken der Früherkennung von Mikrostrukturveränderungen zugrunde gelegt werden.

7. Verfahren nach einem der Ansprüche 2 bis 5,
**dadurch gekennzeichnet, dass** im Rahmen von thermischen Ermüdungsversuchen Referenzdaten zu den Messsignalen a) bis e) an einem Werkstück aufgenommen werden, und
dass auf der Grundlage der Referenzdaten Kalibrierkurven für das Werkstück erstellt werden, die für die Beurteilung der Messsignale a) bis e) zu Zwecken der Früherkennung von Mikrostrukturveränderungen zugrunde gelegt werden.

8. Verfahren nach einem der Ansprüche 1 bis 7,
**dadurch gekennzeichnet, dass** das Erfassen von an wenigstens einer sich innerhalb des Werkstückes ausbildenden Ungänze entstehenden Schallemissionssignalen durch den zweiten EMUS-Wandler im Rahmen eines speziellen Prüftaktes durchgeführt wird, bei dem der zweite EMUS-Wandler passiv mit einer vorgebbaren Triggerschwelle betrieben wird und transiente Ultraschallsignale aufgezeichnet werden.

9. Verfahren nach einem der Ansprüche 1 bis 8,
**dadurch gekennzeichnet, dass** der erste und zweite EMUS-Wandler derart auf die Oberfläche des Werkstückes benachbart zueinander angeordnet werden, dass die den einzelnen zuordenbaren Empfangsaperturen parallel zueinander mit jeweils gleicher Empfangsrichtung ausgerichtet sind.

10. Verfahren nach einem der Ansprüche 1 bis 8,
**dadurch gekennzeichnet, dass** der erste und zweite EMUS-Wandler jeweils an zwei sich gegenüberliegenden Oberflächen oder Stirnseiten des Werkstückes angeordnet werden, so dass die den einzelnen EMUS-Wandlern zuordenbaren Empfangsaperturen einander zugewandt mit jeweils einander zugewandten Empfangsrichtungen ausgerichtet sind.

11. Verfahren nach einem der Ansprüche 1 bis 10,
**dadurch gekennzeichnet, dass** mehrere zweite EMUS-Wandler als Empfangswandler an der Oberfläche des Werkstückes angebracht werden, deren Messsignale zur Ortung einer Ungänze innerhalb des Werkstückes dienen.

12. Verfahren nach einem der Ansprüche 1 bis 11,
**dadurch gekennzeichnet, dass** die Empfangsspannung jeweils des ersten und/oder zweiten EMUS Wandlers erfasst und der weiteren Auswertung zugrundegelegt wird.

13. Verfahren nach einem der Ansprüche 1 bis 12,
**dadurch gekennzeichnet, dass** als Werkstück eine zylinderförmig ausgebildete Ermüdungsprobe verwendet wird, die einen taillierten Mittenbereich vorsieht.

14. Vorrichtung zur zerstörungsfreien Materialuntersuchung an einem aus elektrisch leitendem Material bestehenden Werkstück mit wenigstens zwei EMUS-Wandlern, die jeweils über eine Magneteinheit zur lokalen Einleitung eines Magnetfeldes in das Werkstück sowie über eine mit dem Magnetfeld in Wechselwirkung tretende Hochfrequenzspulenanordnung, kurz HF-Spule, verfügen, und die längs des Werkstücks beabstandet zueinander anordenbar sind,
mit wenigstens einem EMUS-Wandler, der Ultraschallwellen innerhalb des Werkstücks erzeugt und detektiert und mit einem anderen EMUS-Wandler, der als Empfangswandler zumindest Ultraschallwellen detektiert,
und mit einer Steuer- und Auswerteeinheit, die die HF-Spule des einen EMUS-Wandlers mit einem Sendestrom beaufschlagt, die von dem einen EMUS-Wandler empfangene Ultraschallechosignale nach Empfangsamplituden auswertet, und die die Amplituden der am anderen EMUS-Wandler empfangenen Ultraschallsignale integriert und eine Laufzeitmessung durchführt,
**dadurch gekennzeichnet, dass** die Steuer- und Auswerteeinheit die Amplitude des Sendestromes sowie die Wirbelstromimpedanz der HF-Spule des einen EMUS-Wandlers erfasst,
dass die Steuer- und Auswerteeinheit in einem Messmodus betreibbar ist, bei dem mittels des Empfangswandlers ein Schallemissionssignal erfasst wird, das an einer sich innerhalb des Werkstückes ausbildenden Ungänze entsteht, und
dass die Steuer- und Auswerteeinheit die zerstörungsfreie Materialuntersuchung auf der Grundlage sämtlicher erfasster Messsignale zu Zwecken einer Früherkennung von Mikrostrukturveränderungen durchführt.

15. Vorrichtung nach Anspruch 14,
**dadurch gekennzeichnet, dass** die Steuer- und Auswerteinheit in einem Messmodus betreibbar ist, bei dem der andere EMUS-Wandler passiv mit einer vorgebbaren Triggerschwelle betreibbar ist und von Schallemissionen transiente Signale erfasst und aufzeichnet.

## Claims

1. Method for non-destructive material examination of a workpiece consisting of electrically conductive material by means of EMUS testing, which is based on the use of EMUS transducers, each of which is equipped with a magnet unit for the local introduction of a magnetic field into the workpiece and with a radio-frequency coil arrangement, abbreviated as an RF coil, which interacts with the magnetic field, in which relative to a surface of the workpiece at least two EMUS transducers are arranged at a distance from each other along the surface, of which at least one first EMUS transducer generates and also detects ultrasonic waves within the workpiece and the second EMUS transducer, as a receiving transducer, detects at least ultrasonic waves, and in which the following measurement signals are determined:
a) using the first EMUS transducer, ultrasonic wave echo signals emitted by the first EMUS transducer are detected,
b) using the second EMUS transducer, ultrasonic wave signals, so-called sound transmission signals, which are generated by the first EMUS transducer are detected in a time-resolved manner
**characterized in that**
the following measurement signals are determined:
c) detection of an amplitude of the transmitter current with which the RF coil of the first EMUS transducer is operated,
d) detection of an acoustic emission signal that arises at a flaw forming within the workpiece by the transducer, and
that on the basis of all the measurement signals a) to d) the non-destructive material examination (NDE) is carried out for the purpose of early detection of microstructure changes.

2. The method according to Claim 1,
**characterized in that**
the voltage of the RF coil of the first EMUS transducer is additionally detected, which is used as a further measuring signal e) for the early detection of microstructure changes.

3. The method according to Claim 2,
**characterized in that**
the eddy current impedance of the HF-coil is measured while the transmission current of the RF-coil is regulated.

4. The method according to any one of Claims 1 to 3,
**characterized in that**
the first EMUS transducer generates ultrasonic waves propagating into the workpiece in a spatially free manner relative to the workpiece surface, and ultrasonic waves propagating along the workpiece surface,
that components of echo amplitudes reflected within the workpiece are detected by the first EMUS transducer in the form of time-dependent ultrasonic waves and that components of the ultrasonic waves propagating along the workpiece surface are detected by the second EMUS transducer.

5. The method according to any one of Claims 1 to 4,
**characterized in that**
amplitudes of the ultrasonic wave echo signals and integral amplitudes and transit times of the sound transmission signals are determined and used as the basis for the evaluation.

6. The method according to any one of Claims 1 to 5,
**characterized in that**
in the context of thermal fatigue tests, reference data for the measurement signals a) to d) on a workpiece are incorporated, and
that on the basis of the reference data, calibration curves for the workpiece are created that are used as a basis for the evaluation of the measured signals a) to d) for the purpose of early detection of microstructure changes.

7. The method according to any one of Claims 2 to 5,
**characterized in that**
in the context of thermal fatigue tests, reference data for the measurement signals a) to e) on a workpiece are incorporated, and
that on the basis of the reference data, calibration curves for the workpiece are created which are used as a basis for the evaluation of the measured signals a) to e) for the purpose of early detection of microstructure changes.

8. The method according to any one of Claims 1 to 7,
**characterized in that**
the detection of sound emission signals arising at at least one flaw forming within the workpiece is performed by the second EMUS transducer as part of a specific test cycle, in which the second EMUS-transducer is operated passively with an adjustable trigger threshold and transient ultrasonic signals are recorded.

9. The method according to any one of Claims 1 to 8,
**characterized in that**
the first and second EMUS transducer are arranged adjacent to each other on the surface of the workpiece in such a manner that the receiving apertures assignable to the individual [EMUS-transducers] are aligned to each other, each with the same receiving direction.

10. The method according to any one of Claims 1 to 8,
**characterized in that**
the first and second EMUS transducer are arranged on two opposite surfaces or front faces of the workpiece, so that the receiving apertures assignable to the individual EMUS-transducers are aligned facing each other with mutually facing receiving directions.

11. The method according to any one of Claims 1 to 10,
**characterized in that**
a plurality of second EMUS transducers are mounted on the surface of the workpiece as receiving transducers, the measurement signals of which are used to locate a flaw within the workpiece.

12. Method according to any one of Claims 1 to 11,
**characterized in that**
the receiving voltage of each of the first and/or second EMUS transducer is detected and used as the basis for further evaluation.

13. The method according to any one of Claims 1 to 12,
**characterized in that**
as a workpiece a cylindrical fatigue sample is used, which is provided with a waisted central region.

14. Apparatus for non-destructive material examination of a workpiece consisting of electrically conductive material with at least two EMUS transducers, each of which is equipped with a magnet unit for the local introduction of a magnetic field into the workpiece and with a radio-frequency coil arrangement, abbreviated as an RF coil, that interacts with the magnetic field, and which can be arranged at a distance from each other along the workpiece,
with at least one EMUS transducer, which generates and
detects ultrasonic waves within the workpiece and with another EMUS transducer, which as a receiving transducer at least detects ultrasonic waves,
and with a control and evaluation unit which applies a transmission current to the RF coil of the one transducer, analyses the ultrasonic echo signals received by the one EMUS transducer for their receiving amplitudes, and which integrates the amplitudes of the ultrasonic signals at the other EMUS transducer and carries out a transit time measurement,
**characterized in that**
the control and evaluation unit detects the amplitude of the transmission current and the eddy current impedance of the HF-coil of the one transducer,
that the control and evaluation unit can be operated in a measurement mode, in which a sound emission signal which arises at a flaw forming within the workpiece is detected by means of the receiving transducer, and
that the control and evaluation unit carries out the non-destructive material examination (NDE) on the basis of all detected measurement signals for the purposes of early detection of microstructure changes.

15. Device according to Claim 14,
**characterized in that**
the control and evaluation unit can be operated in a measurement mode, in which the second EMUS transducer can be operated passively with an adjustable trigger threshold and detects and records transient signals of sound emissions.

## Revendications

1. Procédé pour l'analyse non destructive de matériaux sur une pièce se composant d'un matériau électro-conducteur au moyen de la technique de test EMUS qui prévoit l'utilisation de transducteurs EMUS, lesquels disposent respectivement d'une unité magnétique pour l'induction locale d'un champ magnétique dans la pièce ainsi que d'un agencement de bobine haute fréquence, en abrégé bobine HF, entrant en interaction avec le champ magnétique, dans lequel, compte tenu d'une surface de la pièce, au moins deux transducteurs EMUS sont disposés à une distance réciproque le long de la surface, dont au moins un premier transducteur EMUS génère des ondes ultrasonores à l'intérieur de la pièce et les détecte également, et le deuxième transducteur EMUS, en tant que transducteur de réception, détectant au moins des ondes ultrasonores, et dans lequel les signaux de mesure suivants sont détectés :
a) détection de signaux d'écho d'ondes ultrasonores à l'aide du premier transducteur EMUS, lesquels proviennent du premier transducteur EMUS,
b) détection en résolution temporelle, à l'aide du deuxième transducteur EMUS, de signaux d'ondes ultrasonores, des dénommés signaux d'écho des ultrasons, lesquels sont générés par le premier transducteur EMUS,
**caractérisé en ce que** les signaux de mesure suivants sont déterminés :
c) détection d'une amplitude du courant d'envoi avec lequel la bobine HF du premier transducteur EMUS est exploitée,
d) détection, par le transducteur de réception, d'un signal d'émission de son apparaissant au niveau d'un réflecteur se formant à l'intérieur de la pièce, et
**en ce que**, sur la base de l'ensemble des signaux de mesure a) à d), on effectue l'analyse non destructive de matériaux pour les besoins d'un diagnostic précoce de modifications microstruturelles.

2. Procédé selon la revendication 1, **caractérisé en ce que** la tension de la bobine HF du premier transducteur EMUS est additionnellement détectée, laquelle est prise comme base en tant qu'autre signal de mesure e) pour le diagnostic précoce de modifications microstructurelles.

3. Procédé selon la revendication 2, **caractérisé en ce que** l'on mesure l'impédance du courant de Foucault de la bobine HF pendant que le courant transmis de la bobine HF est régulé.

4. Procédé selon l'une des revendications 1 à 3, **caractérisé en ce que** le premier transducteur EMUS génère des ondes ultrasonores se propageant dans la pièce de manière libre dans l'espace par rapport à la surface de la pièce, tout comme également des ondes ultrasonores se propageant le long de la surface de la pièce,
**en ce que** des fractions d'amplitudes d'écho d'ondes ultrasonores sous une forme en fonction du temps, réfléchies à l'intérieur de la pièce, sont détectées par le premier transducteur EMUS et **en ce que** des fractions des ondes ultrasonores se propageant le long de la surface de la pièce sont détectées par le deuxième transducteur EMUS.

5. Procédé selon l'une des revendications 1 à 4, **caractérisé en ce que** les amplitudes des signaux d'écho d'ondes ultrasonores ainsi que des amplitudes intégrales et des durées des signaux d'écho des ultrasons sont déterminées et sont prises comme base pour l'analyse.

6. Procédé selon l'une des revendications 1 à 5, **caractérisé en ce que**, dans le cadre d'essais de fatigue thermique, on recueille des données de référence pour les signaux de mesure a) à d) au niveau d'une pièce, et
**en ce que**, sur la base des données de référence, on établit des courbes d'étalonnage pour la pièce, lesquelles sont prises comme base pour l'évaluation des signaux de mesure a) à d) pour les besoins d'un diagnostic précoce de modifications microstructurelles.

7. Procédé selon l'une des revendications 2 à 5,
**caractérisé en ce que**, dans le cadre d'essais de fatigue thermique, on recueille des données de référence pour les signaux de mesure a) à e) au niveau d'une pièce, et
**en ce que**, sur la base des données de référence, on établit des courbes d'étalonnage pour la pièce, lesquelles sont prises comme base pour l'évaluation des signaux de mesure a) à e) pour les besoins d'un diagnostic précoce de modifications microstructurelles.

8. Procédé selon l'une des revendications 1 à 7,
**caractérisé en ce que** la détection de signaux d'émission de son apparaissant au niveau d'au moins un réflecteur se formant à l'intérieur de la pièce est effectuée par le deuxième transducteur EMUS dans le cadre d'un cycle de test spécial où le deuxième transducteur EMUS est exploité de manière passive avec un seuil de déclenchement prédéfinissable et où des signaux ultrasonores transitoires sont enregistrés.

9. Procédé selon l'une des revendications 1 à 8,
**caractérisé en ce que** le premier et le deuxième transducteur EMUS sont disposés au voisinage l'un de l'autre sur la surface de la pièce de manière à ce que les ouvertures de réception pouvant leur être associées individuellement sont orientées parallèlement entre elles avec respectivement une même direction de réception.

10. Procédé selon l'une des revendications 1 à 8,
**caractérisé en ce que** les premier et deuxième transducteurs EMUS sont respectivement disposés sur deux surfaces ou côtés frontaux, situé(e)s en vis-à-vis, de la pièce, de sorte que les ouvertures de réception pouvant être associées aux transducteurs EMUS individuels sont orientées de manière à se faire face avec des directions de réception se faisant respectivement face.

11. Procédé selon l'une des revendications 1 à 10,
**caractérisé en ce que** plusieurs deuxièmes transducteurs EMUS sont aménagés en tant que convertisseur de réception sur la surface de la pièce, dont les signaux de mesure servent à localiser un réflecteur à l'intérieur de la pièce.

12. Procédé selon l'une des revendications 1 à 11,
**caractérisé en ce que** l'on détecte la tension de réception du premier et/ou deuxième transducteur respectif en la prenant comme base pour la suite de l'évaluation.

13. Procédé selon l'une des revendications 1 à 12,
**caractérisé en ce que** l'on utilise un échantillon de fatigue réalisé en forme de cylindre en guise de pièce, lequel prévoit une zone médiane taillée.

14. Dispositif pour l'analyse non destructive de matériaux sur une pièce se composant d'un matériau électro-conducteur avec au moins deux transducteurs EMUS, lesquels disposent respectivement d'une unité magnétique pour l'induction locale d'un champ magnétique dans la pièce ainsi que d'un agencement de bobine de haute fréquence, en abrégé bobine HF, entrant en interaction avec le champ magnétique, et lesquels peuvent être disposés le long de la pièce de manière espacée l'un par rapport à l'autre,
avec au moins un transducteur EMUS, lequel génère des ondes ultrasonores à l'intérieur de la pièce et les détecte, et avec un autre transducteur EMUS en tant que transducteur de réception, lequel détecte au moins des ondes ultrasonores,
et avec une unité de commande et d'évaluation, laquelle alimente la bobine HF de l'un des transducteurs EMUS avec un courant d'envoi, laquelle évalue les signaux d'écho d'ultrasons réceptionnés par l'un des transducteurs EMUS concernant des amplitudes de réception, et laquelle intègre les amplitudes des signaux ultrasonores réceptionnés au niveau de l'autre transducteur EMUS et effectue une mesure de durée,
**caractérisé en ce que** l'unité de commande et d'évaluation détecte l'amplitude du courant d'envoi ainsi que l'impédance du courant de Foucault de la bobine HF de l'un des transducteurs EMUS,
**en ce que** l'unité de commande et d'évaluation peut être exploitée dans un mode de mesure dans lequel on détecte, au moyen du transducteur de réception, un signal d'émission de son qui apparaît au niveau d'un réflecteur se formant à l'intérieur de la pièce, et
**en ce que** l'unité de commande et d'évaluation effectue l'analyse non destructive de matériaux sur la base de l'ensemble des signaux de mesure détectés pour les besoins d'un diagnostic précoce de modifications microstruturelles.

15. Dispositif selon la revendication 14,
**caractérisé en ce que** l'unité de commande et d'évaluation peut être exploitée dans un mode de mesure dans lequel l'autre transducteur EMUS peut être exploité de manière passive avec un seuil de déclenchement prédéfinissable et détecte et enregistre des signaux transitoires d'émissions de son.
